Europäisches Patentamt

European Patent Office

Office européen des brevets

(11) Publication number: **0 034 682**
A1

(12) **EUROPEAN PATENT APPLICATION**

(21) Application number: **80304376.9**

(22) Date of filing: **04.12.80**

(51) Int. Cl.³: **C 08 L 91/08**
B 65 D 65/40, C 09 J 3/00
B 65 D 85/74, B 32 B 15/12
D 21 H 1/14

(30) Priority: **25.02.80 FR 8004056**

(43) Date of publication of application:
**02.09.81 Bulletin 81/35**

(84) Designated Contracting States:
**BE CH DE GB IT LI NL SE**

(71) Applicant: **MOBIL OIL CORPORATION**
**150 East 42nd Street**
**New York New York 10017(US)**

(72) Inventor: **Lys, Guy**
**Route Saint Pierre de Varengeville**
**F-76480 Duclair(FR)**

(72) Inventor: **Goyer, André**
**Le Clairval HA 21**
**F-76170 Lillebonne(FR)**

(74) Representative: **Cooper, John Anthony et al,**
**Mobil Court 3 Clements Inn**
**London WC2A 2EB(GB)**

(54) **Laminating wax for packaging laminates.**

(57) Laminates useful for packaging fatty food products such as butter comprise a layer of metal foil adhered to a layer of vegetable parchment by means of a wax-based adhesive comprising a flexible microcrystalline wax with 2 to 20 percent by weight of an alpha-methylstyrene resin.

EP 0 034 682 A1

Croydon Printing Company Ltd

1

## LAMINATING WAX FOR PACKAGING LAMINATES

This invention relates to waxes which are useful for making packaging laminates, especially metal foil/paper laminates used for packaging fatty products such as butter.

Fatty products such as butter may be packaged in laminates of metal foil generally aluminum foil, and paper. The foil and the paper may be joined together by a suitable adhesive. The paper generally used for this purpose is vegetable parchment, also known as sulfur paper. Paper of this type is composed exclusively of vegetable fibers and has been subjected to treatment in successive baths of concentrated sulphuric acid in order to remove residual impurities and modify the cellulosic chains and render the resulting product waterproof. The paper can be treated with metal salts or complexes to improve resistance to water or fats. The treatment is usually effected by contacting the paper with a solution of the metal salt or complex. Chromium salts and complexes are particularly useful in this respect, especially the complexes of chromium chloride with long chain fatty acids such as stearic acid. The treatment with the metallic salts or complexes may be carried out so as to effect only a surface treatment or, alternatively, to impregnate the paper with the metallic compound throughout. If necessary, treatment with the metallic compound may be followed with a heating step.

Vegetable parchment or sulphur paper which has not been treated with one of these metallic compounds possesses a lower resistance to water and fat than the treated paper and when the non-treated paper is used in the packaging laminates, the product is often unsatisfactory, possessing inadequate resistance to water.

We have now found that satisfactory packaging laminates for fatty products such as butter can be made by using a laminating adhesive comprising a flexible microcrystalline wax and 2 to 12%, preferably about 6%, by weight with respect to the wax, of an alpha methylstyrene resin with a softening point of less than approximately 85°C. The paper may be of the treated or untreated type, with good results being obtained in either case, although the superior water resistance obtained with the present laminating waxes enables the untreated types to be used for a greater number of applications.

The microcrystalline wax which is the main constituent of the adhesive is, as is well known, a complex mixture of molecules of paraffinic wax and·other types of hydrocarbon. The flexible microcrystalline waxes used in the present compositions have a melting point from 60° to 80°C, an oil content of 1 to 5%, preferably 3 to 5%, and a needle penetration of 40 to 60 at 25°C. At higher temperatures, the penetration will be greater, for example, about 250 at 42°C. The penetration is measured in accordance with ASTM D-1321 and is measured in units of 0.1 mm.

Microcrystalline waxes are generally obtained by extracting heavy distillates from the second distillation of crude oil with suitable selective solvents such as methyl ethyl ketone. Depending on the conditions with which the distillation and extraction have been carried out and on the nature of the solvent and of the heavy distillate (once the second distillate has been freed of its aromatic and asphaltic components) it is possible to obtain microcrystalline waxes with differing compositins and properties. The present compositions employ laminating grade waxes, that is, microcrystalline waxes which are used for preparing laminates. These waxes contain sufficient oil to provide good flexibility and high bonding strength on various substrates.

When microcrystalline waxes having all the desired properties are not available, it is possible to use mixtures of microcrystalline waxes. By modifying the relative proportions of two or more microcrystalline waxes it therefore becomes possible to prepare a laminating wax having the optimum combination of properties.

The alpha-methylstyrene resin used in the present compositions is a homopolymer or copolymer of alpha-methylstyrene. Copolymers with other unsaturated monomers are possible, particularly those containing at least 50% of units derived from alpha-methylstyrene, but its homopolymers are preferred. The softening point of the resin should be less than 85°C. Resins of this type are commercially available under the trademarks KRISTALEX and PICCOTEX.

The alpha-methylstyrene resins used in the present compositions are able to wet the paper effectively, thus preventing dimensional variation of the paper when in contact with water and giving a better bond to the metal foil. This effect is particularly notable with untreated vegetable parchment. This behavior is in contrast to that of various synthetic and wood aliphatic resins (aliphatic lignin resins) which remain adhered to the foil after the laminate has been immersed in water.

The alpha-methylstyrene resins also conform to the requirements of materials to be used for butter packaging, thereby permitting their use for this purpose.

The metal used in the laminate will normally be aluminum and this may be embossed or printed with designs or indicia according to the desire of the user. The foil may be laminated to the paper using

4

conventional laminating procedures for this purpose.
Suitable laminating techniques generally consist in
coating the metal foil with a suitably proportioned
quantity of the wax/resin mixture and then bringing the
coated surface into contact with the other material and
cooling the assembly so as to solidify the wax adhesive,
ensuring lamination. The conditions of operation,
advancing speed, temperature of application of the
mixture, cooling temperature, will be easily adapted in
relation to the properties of the adhesive mixture.

The wax compositions of the present invention
give good adhesion between the metal foil and untreated
vegetable parchments i.e. parchments which have not been
wholly or partly impregnated with chromium salts or
complexes. This is a particular advantage because it
enables satisfactory laminates to be produced using
untreated paper. However, treated paper may be used if
desired. Suitable treating materials include the
stearic acid complexes of chromium chloride, for
example, the product sold by E. I. duPont de Nemours and
Company under the trademark "Quilon".

In the following Examples which are given to
illustrate the invention, the test employed consisted of
measuring the force (expressed in g./cm. length of
sample) required to delaminate the vegetable parchment
from the aluminum foil. Tests were carried out both on
dry samples of the laminate and after immersion in
water.

Example 1

A mixture was made of two microcrystalline waxes having the following characteristics:

MOBIL WAX 2360 - melting point ($^{\circ}$C):75.4

      - penetration at 25$^{\circ}$C (mm. X 10$^{-1}$): 26

      - penetration at 42$^{\circ}$C (mm. X 10$^{-1}$): 150 max.

      - kinematic viscosity at 99$^{\circ}$C (cSt): 11.4

MOBIL WAX 2370 - melting point (C$^{\circ}$): 76.5

      - penetration at 25$^{\circ}$C (mm. X 10$^{-1}$): 46

      - penetration at 42$^{\circ}$C (mm. X 10$^{-1}$): 220-250

      - kinematic viscosity at 99$^{\circ}$C (cSt): 14.6

The relative quantities of these two waxes in the mixture were 68 parts by weight of MOBILWAX 2370 and 20 parts by weight of MOBILWAX 2360.

This mixture of waxes was blended with various alpha-methylstyrene resins as follows:

    Kristalex F 85    - softening point 85$^{\circ}$C approximately

    Kristalex 3070    - softening point 70$^{\circ}$C approximately

    Piccotex 75    - softening point 75$^{\circ}$C approximately

    Piccotex 100    - softening point 100$^{\circ}$C approximately

    Piccotex 120    - softening point 120$^{\circ}$C approximately.

The results obtained by using these mixtures to prepare laminates of untreated vegetable parchment and aluminum foil are given in Table 1 below. The delamination force is reported both with dry laminate and after immersion in water for 12 and 24 hours.

## TABLE 1

| | | | | | |
|---|---|---|---|---|---|
| Wax mixture (parts by weight) | 88 | 88 | 88 | 88 | 88 |
| Resin (parts by weight) | | | | | |
| Kristalex 85 | 12 | | | | |
| Kristalex 3070 | | 12 | | | |
| Piccotex 75 | | | 12 | | |
| Piccotex 100 | | | | 12 | |
| Piccotex 120 | | | | | 12 |
| Delamination force (g/cm) (1) | | | | | |
| when dry | 43 | 48 | 53 | incompatible | |
| when immersed | | | | | |
| - 1 hr. | 46 | 55 | 60 | - | - |
| - 24 hrs. | 45 | 60 | 63 | - | - |

(1) delamination speed 10 cm/min.,
coating of 10 g/m² on non-treated vegetable
parchment laminated to aluminum sheet (20
micron thickness at 100°C), 1.5 secs.,
pressure 2 bars.

The results above demonstrate the desirability of using resins with softening points below 85°C.

## Example 2

Blends of MOBILWAX 2360, MOBILWAX 2370, Kristalex F85 and Kristalex 3070 were prepared and used in laminating aluminum foil and untreated vegetable parchment in the manner described in Example 1. The resulting laminates were then tested for delamination force with the dry laminate and after 1 hr and 24 hrs. immersion. The results are shown in Table 2 below.

TABLE 2

| | | | | | | | | | | | |
|---|---|---|---|---|---|---|---|---|---|---|---|
| MOBILWAX 2370 | 80 | 70 | 72 | 74 | 76 | 78 | 70 | 72 | 74 | 76 | 78 |
| MOBILWAX 2360 | 20 | 20 | 20 | 20 | 20 | 20 | 20 | 20 | 20 | 20 | 20 |
| KRISTALEX F85 | | 10 | 8 | 6 | 4 | 2 | | | | | |
| KRISTALEX 3070 | | | | | | | 10 | 8 | 6 | 4 | 2 |
| Delamination force (g/cm) | | | | | | | | | | | |
| Dry | 40 | 50 | 53 | 48 | 50 | 48 | 55 | 60 | 48 | 45 | 45 |
| Immersed, 1 hr. | 0 | 50 | 50 | 53 | 55 | 50 | 60 | 60 | 54 | 50 | 40 |
| Immersed, 24 hrs. | 0 | 45 | 50 | 50 | 55 | 50 | 55 | 55 | 50 | 50 | 40 |

Example 3

Two samples of MOBILWAX 2370 having different bonding strengths were used in this Example. One sample (Sample A) had a bonding strength (equal to the dealumination force in the tests described in Example 1 above) of 40 g./cm. and was otherwise similar in its properties to the MOBILWAX 2370 described in Example 1. The second sample (Sample B) had a bonding strength of 28g./cm. and was otherwise similar to the MOBILWAX 2370 of Example 1.

Blends were made of 80 parts by weight of Sample A or Sample B with 20 parts by weight of MOBILWAX 2360. The two blends were then blended with Kristalex 85 in the proportions of 94 parts by weight wax to 6 parts by weight resin. The resulting blends, Blends A and B respectively (based on Samples A and B), were then used to prepare laminates of foil with both treated and untreated regetable parchments. The laminates were then tested in the manner described above. The results are given in Table 3 below.

10

## TABLE 3

| | Blend A | Blend B |
|---|---|---|
| ASTM color | less than 0.5 | less than 0.5 |
| Odor | slight | slight |
| Relative Density at 20°C | 0.92 | 0.92 |
| Softening point, °C. | 78.2 | 77.6 |
| Kinematic viscosity, 100°C cSt | 14.50 | 14.70 |
| Penetration, 25°C | 40· | 54 |
| 42°C | 140 | 170 |
| Bonding strength (Al/Al, g/cm) | 45 | 38 |
| (Al/untreated parchment) dry | 50 | 42 |
| - immersed 1 hr. | 54 | 52 |
| - immersed 24 hrs. | 55 | 55 |
| (Al/treated parchment) dry | 50 | 40 |
| - immersed 1 hr. | 55 | 48 |
| - immersed 24 hrs. | 55 | 48 |

CLAIMS:

    1.   A wax based composition which comprises a microcrystalline wax and from 2 to 20 percent by weight with respect to the wax, of an alpha-methylstyrene resin having a softening point of less than 85°C.

    2.   A composition according to claim 1 in which the resin comprises a homopolymer of alpha-methylstyrene.

    3.   A composition according to claim 1 or 2 in which the composition comprises approximately 6 percent by weight of the resin.

    4.   The composition according to any of claims 1 to 3 in which the microcrystalline wax has a penetration of 40 to 60 (ASTM D-1321).

    5.   The composition according to any of claims 1 to 4 in which the microcrystalline wax has an oil content of 3 to 5 percent by weight.

    6.   A packaging laminate which comprises a layer of metal foil adhered to a layer of paper by means of a wax-based laminating composition as claimed in any of claims 1 to 5.

    7.   A laminate according to claim 6 in which the metal foil is aluminum foil.

    8.   A laminate according to claim 7 in which the paper is vegetable parchment.

    9.   A laminate according to claim 8 in which the paper is untreated vegetable parchment.

European Patent Office

**EUROPEAN SEARCH REPORT**

Application number

EP 80 30 4376

| Category | Citation of document with indication, where appropriate, of relevant passages | Relevant to claim |
|---|---|---|
| | GB - A - 660 363 (WINGFOOT)<br>* Claims 1,2,4,9-11; page 1, line 50 - page 2, line 79; page 4, line 31 - page 5, line 9; examples 1,2 *<br><br>-- | 1,3,5 -8 |
| A | US - A - 3 616 106 (H.C. MOYER) | |
| A | US - A - 2 944 039 (S.E. JOLLY) | |
| A | US - A - 3 194 469 (G.G. RUMBERGER) | |
| A | US - A - 2 441 477 (R.A. FARRELL) | |
| A | FR - A - 1 544 250 (PAPET. DES CHARENTES)<br><br>---- | |

**DOCUMENTS CONSIDERED TO BE RELEVANT**

**CLASSIFICATION OF THE APPLICATION (Int Cl.³)**

C 08 L 91/08
B 65 D 65/40
C 09 J 3/00
C 08 L 91/08
B 65 D 85/74
B 32 B 15/12
D 21 H 1/14

**TECHNICAL FIELDS SEARCHED (Int. Cl.³)**

C 08 L 91/06
91/08
C 09 J 3/00
B 32 B
B 65 D 85/74
85/76
75/26
D 21 H 1/14

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family.
corresponding document

The present search report has been drawn up for all claims

| Place of search | Date of completion of the search | Examiner |
|---|---|---|
| The Hague | 27-05-1981 | BLASBAND |

EPO Form 1503.1 06.78